# EUROPÄISCHE PATENTSCHRIFT

(11) **EP 0 895 616 B1**
(45) Veröffentlichungstag und Bekanntmachung des Hinweises auf die Patenterteilung: **12.07.2000**
(21) Anmeldenummer: 97922870.7
(22) Anmeldetag: 24.04.1997
(51) Int. Cl.: G05B 19/418, G05B 23/02

(54) **VERFAHREN UND APPLIKATIONSEINRICHTUNG ZUR ANZEIGE UND ALARMIERUNG VON MESSWERTEN AN KOMMUNIKATIONSENDGERÄTEN**
PROCESS AND APPLICATION MEANS FOR THE DISPLAY AND PROVISION OF ALARM MEANS FOR MEASURED VALUES ON COMMUNICATIONS TERMINALS
PROCEDE ET DISPOSITIF D'APPLICATION POUR AFFICHAGE AVEC ALARME, DE VALEURS DE MESURE SUR DES TERMINAUX DE TELECOMMUNICATIONS

(30) Priorität: 26.04.1996 DE 19616827
(43) Veröffentlichungstag der Anmeldung: 10.02.1999
(73) Patentinhaber: SIEMENS AKTIENGESELLSCHAFT, 80333 München (DE)
(72) Erfinder: SPAHL, Siegfried, D-82178 Puchheim (DE); LUKAS, Günter, A-1150 Wien (AT); KÖBERL, Johann, A-1050 Wien (AT); STÖCKL, Herwig, A-1200 Wien (AT)
(86) Internationale Anmeldenummer: DE9700848
(87) Internationale Veröffentlichungsnummer: WO9741493

(56) Entgegenhaltungen:
- WO-A-96/08753
- WO-A-96/10313
- GB-A- 2 207 266
- GB-A- 2 283 845
- RACKLYEFT D ET AL: "INTELLIGENT MAP GATEWAY" ADVANCES IN INSTRUMENTATION AND CONTROL, Bd. 47, Nr. PART 02, Seiten 1431-1436, XP000328969
- BAERNREUTHER B: "MAP-ANWENDUNGSDIENSTE UEBER EINEM KOMMUNIKATIONSSYSTEM FUER HETEROGENE FELDBUS-VERBUNDE" AUTOMATISIERUNGSTECHNISCHE PRAXIS - ATP, Bd. 33, Nr. 7, Seiten 358-363, XP000243094
- ELEKTONIK, no. 12, 1994, Seiten 64-68, Elmar Flaschka 'BINÄRE SENSOREN AM BUS'

## Beschreibung

Für eine Überwachung von elektrischen Einrichtungen, beispielsweise von Generatoren in einem Kraftwerk, werden die physikalischen Eigenschaften der elektrischen Einrichtungen, beispielsweise die elektrische Leistung der Generatoren gemessen und die gemessenen Werte, d.h. die Meßwerte an eine zentrale Stelle oder wenige dezentrale Stellen übermittelt und dort beispielsweise durch Wanddisplays, d.h. entsprechende Anzeigeeinrichtungen angezeigt.

Des weiteren ist für eine Steuerung von Leistungsmerkmalen in Kommunikationsnetzen, insbesondere privaten Kommunikationsnetzen, eine Kopplung der Vermittlungseinrichtung, insbesondere private Nebenstellenanlagen, mit einer überwiegend durch eine Datenverarbeitungsanlage realisierte Applikationseinrichtung über eine Applikationsschnittstelle bzw. ACL-Schnittstelle (Application Connectivity Link) vorgesehen. Gemäß der Applikationsschnittstelle ist physikalisch die private Vermittlungseinrichtung, beispielsweise die private Vermittlungseinrichtung HICOM 300 der Firma Siemens, über eine V.24-Schnittstelle oder alternativ über eine ISDN-Basisschnittstelle (S0) mit der Applikationseinrichtung verbunden. Die Applikationsschnittstelle ist vorzugsweise in einer Betriebstechnik-Einheit - bei der Vermittlungseinrichtung HICOM 300 ein integrierter Betriebstechnik-Server - eine Vermittlungseinrichtung realisiert und steuert den Kommunikationsaustausch gemäß einem definierten Protokoll - z.B. MSV1 - mit definierten Meldungen. Die in die Meldungen eingebetteten Informationen entsprechen den vermittlungstechnischen Anweisungen und Ereignismeldungen der Vermittlungseinrichtung. Als Bindeglied zwischen der Applikationseinrichtung und der Vermittlungseinrichtung ist in diesem eine zur Ausführung der vermittlungstechnischen Anweisungen und zum Generieren der vermittlungstechnischen Ereignismeldungen geeignete, d.h. eine DVA-gesteuerte Verbindungsaufbauten unterstützende Programmstruktur vorgesehen, wobei durch die vermittlungstechnischen Anweisungen die Verbindungssteuerung beeinflußt und durch vermittlungstechnische Ereignismeldungen der aktuelle vermittlungstechnische Zustand von Verbindungen bzw. Kommunikationsbeziehungen angezeigt wird.

Aus Advances in Instrumentation and Control, Vol. 47, Teil 2, Research Triangle Park, NC, US, Seiten 1431 - 1435, D. Racklyeft et al. "Intelligent Map Gateway" ist ein Netzwerk bekannt, an das unterschiedliche Komponenten angeschlossen sind. Für die Kommunikation zwischen proprietären Komponenten bzw. proprietären Kommunikationsprotokollen ist ein Gateway vorgesehen, mit dessen Hilfe eine Protokollanpassung durchgeführt wird. Hierzu werden die einzelnen Komponenten gepolt und detektierte, zu übermittelnde Daten an die hierfür vorgesehenen Anwendungen übermittelt.

Aus der GB-A-2 283 845 A ist ein Temperaturüberwachungssystem bekannt, bei dem man eine Zentraleinheit mehrere Sensoreinheiten drahtlos angeschlossen sind. In der mikroprozessorgesteuerten Sensoreinheit sind Mittel zur drahtlosen Übertragung von Meßwerten vorgesehen. In der Zentraleinheit ist ein Speicher für die Speicherung der drahtlos übermittelnden Meßwerten, und sind ebenfalls für die drahtlose Übertragung von Meßwerten vorgesehen.

Aus der WO-A-96/08753 ist eine Meßanordnung beschrieben, bei der Sensoreinheiten über ein Busnetz vernetzt sind. Die Sensoreinheiten werden durch einen an das Busnetz angeschlossenen ASI-Master gesteuert. Hierbei werden durch den ASI-Master von den Sensoreinheiten übermittelte Meßwerte aufgesammelt und gespeichert. Ein Anschluß an ein Kommunikationsnetz ist nicht vorgesehen.

In der Druckschrift Elektronik, Nr. 12, 1994, Seiten 64 - 68, Elmar Flaschka "Binäre Sensoren am Bus" ist eine Zentraleinheit (Symmatik-Einrichtung) beschrieben, an die über Verbindungen mehrere Sensoreinheiten angeschlossen sind. Hierbei werden die von den Sensoreinheiten gemessenen Meßwerte durch die Zentraleinheit zyklisch abgefragt bzw. gepolt. In der Zentraleinheit werden die übermittelten Meßwerte erfaßt und gespeichert. Das ASI-System kann in ein übergeordnetes Rechnernetz eingebunden werden.

Die der Erfindung zugrundeliegende Aufgabe besteht darin, die Meßwerte von elektrischen **Einrichtungen**, beispielsweise die gemessenen Leistungswerte von Generatoren eines Kraftwerks, mit geringstem Aufwand an unterschiedlichen Orten zu visualisieren. Die Aufgabe wird durch die Merkmale des Anspruchs 1 gelöst.

Ein wesentlicher Aspekt des erfindungsgemäßen Verfahrens ist darin zu sehen, daß die Meßwerte in einer mit einer Vermittlungseinrichtung verbundenen Applikationseinrichtung erfaßt und dort gespeichert werden. Eine im Rahmen einer Verbindungssteuerung von einem Kommunikationsnetz-Endgerät übermittelte Meßwertanforderung wird in der Vermittlungseinrichtung erfaßt und über die Applikationsschnittstelle an die Applikationseinrichtung gemeldet. Daraufhin werden in dieser die gespeicherten Meßwerte mit Hilfe der Vermittlungseinrichtung über dieses an das die Meßanforderung übermittelnde Kommunikationsnetz-Endgerät vermittelt.

Mit Hilfe des erfindungsgemäßen Verfahrens können folglich von beliebigen Kommunikationsnetz-Endgeräten einer Vermittlungseinrichtung sowie auch von einer anderen Vermittlungseinrichtung Meßwerte, die an einer elektrischen **Einrichtung** gemessen werden, zu beliebigen Zeitpunkten abgerufen und angezeigt werden. Durch das erfindungsgemäße Verfahren wird folglich eine größtmögliche Flexibilität bei der Übermittlung, Vermittlung und Visualisierung von Meßwerten an unterschiedliche geografische Orte erreicht. Des weiteren wird der wirtschaftliche Aufwand insbesondere bei der Nutzung bereits vorhandener Vermittlungseinrichtungen bzw. von daran angeschlossenen Kommunikationseinrichtungen für die Übermittlung, Vermittlung und Visualisierung von Meßwerten reduziert.

Ein weiterer wesentlicher Aspekt des erfindungsgemäßen Verfahrens ist darin zu sehen, daß der zumindest eine, in der Applikationseinrichtung erfaßte Meßwert mit zumindest einer in dieser Applikationseinrichtung gespeicherten, vorgegebenen Meßwertgrenze verglichen wird und bei einem Meßwertgrenzüber- oder -unterschreiten des zumindest eines erfaßten Grenzwertes mit Hilfe einer in der Vermittlungseinrichtung durchgeführten und von der Applikationseinrichtung gesteuerten Verbindungssteuerung das Über- bzw. Unterschreiten an zumindest einem vorgegebenen Kommunikationsendgerät optisch und/oder akustisch angezeigt wird - Anspruch 2. Durch dieses erfindungsgemäße Verfahren wird automatisch ein Alarm bei einem Überoder Unterschreiten eines Meßwertes bei einem vorgegebenen Kommunikationsnetz-Endgerät - beispielsweise bei einer zentralen Störungs- und Überwachungsstelle - akustisch und/oder optisch angezeigt. So wird beispielsweise bei einem Unterschreiten eines Meßwertes, der die abgegebene Leistung eines Generators in einem Kraftwerk repräsentiert, automatisch eine Verbindung zu einem vorgegebenen Kommunikationsnetz-Endgerät - beispielsweise einer zentralen Überwachungsstelle - aufgebaut und dort dieses Unterschreiten beispielsweise als Ausfall des betreffenden Generators angezeigt. Auch hierbei wird eine größtmögliche Flexibilisierung der Übertragung des Alarms zu unterschiedlichsten Orten, an denen sich z.B. das Überwachungspersonal befindet, erreicht.

Besonders vorteilhaft wird das erfindungsgemäße Verfahren für Meßwerte verwendet, die an Generatoren gemessene Einzel- oder Gesamtleistungs-Meßwerte repräsentieren - Anspruch 3. Mit Hilfe des erfindungsgemäßen Verfahrens können hierbei sowohl die Meßwerte zu beliebigen Zeitpunkten von beliebigen Kommunikationsnetz-Endgeräten im Sinne einer Überprüfung abgerufen werden als auch einer an einem Kommunikationsnetz-Endgerät sich befindende Überwachungsperson bzw. -personal ein Überschreiten bzw. Unterschreiten der Meßwerte alarmiert werden.

Gemäß einer vorteilhaften Weiterbildung des erfindungsgemäßen Verfahren ist für das zumindest eine Kommunikationsnetz-Endgerät in der Vermittlungseinrichtung eine Verkehrsbeziehungsgruppe konfiguriert - Anspruch 4. Durch diese Maßnahme kann die Anzahl der Kommunikationsnetz-Endgeräte auf die gewünschte bzw. erforderliche Anzahl von Kommunikationsnetz-Endgeräten begrenzt werden - insbesondere hinsichtlich einer Gruppe von Kommunikationsnetz-Endgeräten, bei denen Meßwerte visualisiert werden können.

Gemäß einer weiteren vorteilhaften Ausgestaltung des erfindungsgemäßen Verfahrens werden die Alarmierung und die Meßwertgrenzüber- oder -unterschreitungen an der Bedieneroberfläche der Kommunikationsnetz-Endgeräte alphanumerisch angezeigt. Durch die alphanumerische Anzeige können sowohl die Meßwerte als auch Hinweise über die Zuordnung der unter- oder überschrittenen Meßwerte zu den technischen Einrichtungen in einfachster Weise angezeigt werden.

Weitere vorteilhafte Ausgestaltungen des erfindungsgemäßen Verfahrens sowie eine vorteilhafte Ausgestaltung einer Applikationseinrichtung zur Durchführung der erfindungsgemäßen Verfahren sind den weiteren Ansprüchen zu entnehmen.

Im folgenden wird das erfindungsgemäße Verfahren bzw. erfindungsgemäße Applikationseinrichtung anhand eines Blockschaltbildes und von zwei Ablaufdiagrammen näher erläutert. Dabei zeigen:
- FIG 1: eine Kommunikationsanordnung zur Durchführung des erfindungsgemäßen Verfahrens,
- FIG 2A: ein Ablaufdiagramm für eine angeforderte Anzeige an einem Kommunikationsnetz-Endgerät, und
- FIG 2B: ein Ablaufdiagramm für eine Alarmierung eines Überbzw. Unterschreitens eines Meßwertes an einem vorgegebenen Kommunikationsnetz-Endgerät.

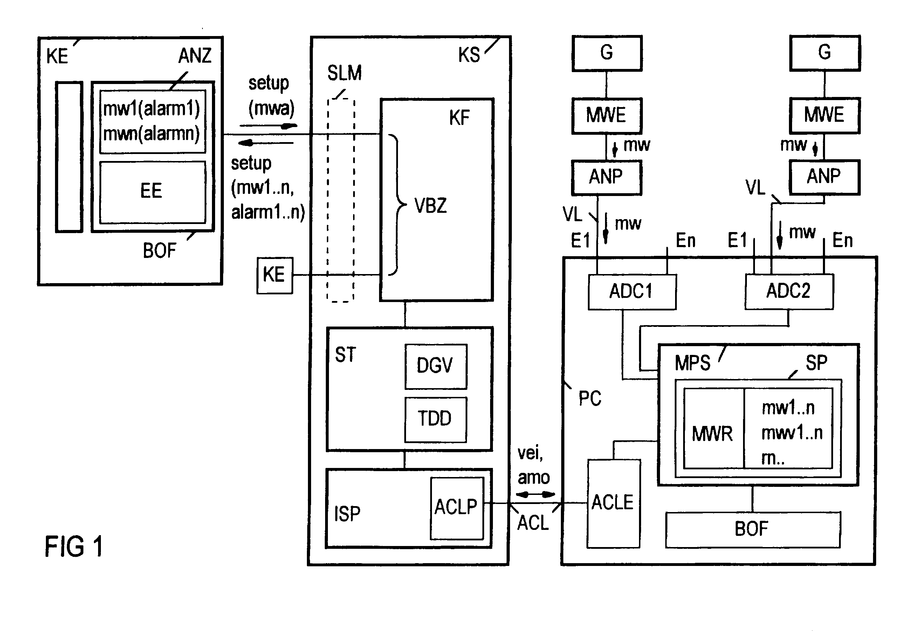

FIG 1 zeigt ein Kommunikationssystem KS - insbesondere ein privates Kommunikationssystem - mit einer ACL-Schnittstelle ACL, an die über eine gleichartig realisierte ACL-Schnittstelle ACL eine durch einen Personalcomputer realisierte Applikationseinrichtung PC - im weiteren mit Personalcomputer PC bezeichnet - angeschlossen ist. Im Kommunikationssystem ist die ACL-Schnittstelle ACL durch eine in einem integrierten Betriebstechnik-Server IPS implementierte ACL-Programmstruktur ACLP realisiert; im Personalcomputer PC ist die ACL-Schnittstelle ACL in einer ACL-Einheit ACLE physikalisch und prozedural realisiert. Die Abkürzung ACL steht für Applications Connectivity Link und bedeutet, daß über diese ACL-Schnittstelle ACL ein Kommunikationsaustausch für eine applikationsabhängige Verbindungssteuerung über eine Verbindung, d.h. einen Link gesteuert wird.

Das Kommunikationssystem KS weist für die vermittlungstechnische sowie betriebstechnische Steuerung eine Steuereinrichtung ST auf, die mit einem **Koppelfeld** KF und dem integrierten Betriebstechnik-Server ISP verbunden ist. In der Steuereinrichtung ST ist neben der nicht dargestellten, wesentlichen vermittlungs- und betriebstechnischen Programmstruktur eine DVA-gesteuerte Verbindungsaufbauten unterstützende Programmstruktur DGV - d.h. eine Vermittlungsroutine DGV - für eine Zusammenarbeit mit dem Personalcomputer PC und eine die Übermittlung von über die ACL-Schnittstelle ACL übermittelten Daten- bzw. Textinformationen zu zumindest einem angeschlossenen Kommunikationsendgerät KE steuernde Text-Datenprogrammstruktur TDD - d.h. eine Datenübermittlungsroutine TDD - vorgesehen.

Im **Koppelfeld** KF ist mit Hilfe von betriebstechnischen Anweisungen amo eine Verkehrsbeziehungsgruppe VBZ konfiguriert, d.h. eingerichtet, der an das Kommunikationssystem KS angeschlossene Kommunikationsendgeräte KE zugeordnet sind - beispielhaft sind zwei zugeordnete Kommunikationsendgeräte KE dargestellt. Die Kommunikationsendgeräte sind über Teilnehmeranschlußmodule SLM - durch ein strichliertes Rechteck angedeutet - mit dem **Koppelfeld** KF verbunden. Die Kommunikationsendgeräte KE sind mit einer Bedieneroberfläche BOF ausgestattet, die durch eine Anzeigeeinheit ANZ und durch Eingabeelemente EE - z.B. der Wähltastatur einschließlich zusätzlicher Funktionstasten - gebildet ist. Mit Hilfe dieser Eingabeelemente EE werden im Rahmen eines Verbindungsaufbaus Meßwertanforderungen mwa im Kommunikationsendgerät KE gebildet und an das Kommunikationssystem KS übermittelt. Die Anzeigeeinheit ANZ ist beispielsweise durch eine LCD-Anzeige realisiert.

Durch die DVA-gesteuerte Verbindungsaufbauten unterstützende Programmstruktur DGV werden alle vermittlungstechnischen Ereignisse vei - im Ausführungsbeispiel die von den der Verkehrsbeziehungsgruppe VBZ zugeordneten Kommunikationsendgeräten KE - erfaßt - auch die Meßwertanforderung mwa - und über die ACL-Schnittstelle ACL an eine Meßwertroutine MWR im Personalcomputer PC übermittelt. Analog hierzu werden von der Meßwertroutine MWR übermittelten vermittlungstechnischen Anweisungen amo durch die DVA-gesteuerte Verbindungsaufbauten unterstützende Programmstruktur DGV ausgeführt, d.h. die angegebenen vermittlungstechnischen Aktivitäten eingeleitet. Des weiteren werden die durch eine Meßwertanforderung mwa bestimmten Meßwerte mwl...n mit Hilfe von betriebstechnischen Anweisungen amo an die Text-Daten-Programmstruktur TDD übermittelt und mit dessen Hilfe an das die Meßwertanforderung mwa übermittelnde Kommunikationsendgerät KE übermittelt.

Im Personalcomputer PC ist die ACL-Einrichtung ACLE mit einem Mikroprozessorsystem MPS verbunden, an das eine Bedieneroberfläche BOF - bei Personalcomputern PC durch eine Bildschirmeinrichtung und eine Tastatur gebildet - und beispielsweise zwei Erfassungseinheiten ADC1,2 angeschlossen sind. Die Meßwertroutine MWR ist in einem Speicher SP des Mikroprozessorsystems MPS programmtechnisch realisiert. Jede der Erfassungseinheiten ADC1,2 weist beispielsweise 15 Eingänge E1...n für die Erfassung von 15 Meßwerten mwl...n auf. An einen Teil dieser Eingänge E1...n sind über Verbindungsleitungen VL Anpassungseinheiten ANP angeschlossen, die über eine Meßwerteinheit MWE mit einem Generator G verbunden sind. Bei den Generatoren G handelt es sich beispielsweise um Generatoren für die Erzeugung elektrischer Energie in Kraftwerken. Mit Hilfe der Meßwerteinheit MWE wird beispielsweise die Leistung - kann alternativ die Spannung oder der Strom sein - gemessen und aufgrund der Messung ein Meßwert mw gebildet. Mit Hilfe der Anpassungseinrichtung ANP wird gegebenenfalls der Meßwert mw an die physikalischen Bedingungen der Eingänge E1...n angepaßt. Beispielsweise wird ein in asymmetrischer Form vorliegender Meßwert mw in einen in symmetrischer Form vorliegenden Meßwert mw umgewandelt - kann durch Trennwandler erfolgen. Die beispielsweise in analoger Form vorliegenden Meßwerte mw werden in der Erfassungseinheit ADC1,2 in digitale Form umgewandelt und an die Meßwertroutine MWR im Mikroprozessorsystem MPS übermittelt. Mit Hilfe der Meßwertroutine MWR werden die Meßwerte mw1...n in dem Speicher SP des Mikroprozessorsystems MPS gespeichert. Die Abtastung der beispielsweise kontinuierlich vorliegenden Meßwerte MW1...n mit Hilfe der Erfassungseinheiten ADC1,2 oder auch der Meßwertroutine MWR erfolgt in zyklischen Abständen - beispielsweise im Sekundentakt. Die Abtastgeschwindigkeit kann je nach Anwendungsfall eingestellt bzw. angepaßt werden.

Des weiteren sind im Speicher SP des Mikroprozessors MPS gemäß dem erfindungsgemäßen Verfahren zusätzlich vorgegebene Meßwerte mwv1...m gespeichert. Diese vorgegebenen Meßwerte mwv1...m repräsentieren Meßwertgrenzen, bei deren Unter- oder Überschreiten eine Alarminformation alarm1...m gebildet und über die ACL-Schnittstelle ACL an das Kommunikationssystem KS übermittelt und mit dessen Hilfe an ein vorgegebenes Kommunikationsendgerät KE vermittelt wird. Das vorgegebene Kommunikationsendgerät KE ist bei derjenigen Person angeordnet, die bei einem Unter- oder Überschreiten von Meßwerten mw1...n die entsprechenden Aktionen einleiten kann bzw. muß. Anstelle eines vorgegebenen Kommunikationsendgerätes KE sind alternativ mehrere vorgegebene Kommunikationsendgeräte KE zuordenbar, an die ein Unter- bzw. Überschreiten von Meßwerten mw1...n gemeldet wird. Diese Maßnahme erhöht die Entstörungssicherheit bei einem Auftreten eines Fehlers in einem der Generatoren G in einem Kraftwerk. Die Rufnummern rn.. der vorgegebenen, d.h. zu informierenden Kommunikationsendgeräte KE sind ebenfalls im Speicher SP des Mikroprozessorsystems MPS des Personalcomputers PC gespeichert. Durch einfache Eingaben an der Bedieneroberfläche BOF des Personalcomputers PC sind Änderungen bzw. Modifikationen der Rufnummern rn.. möglich und somit kann in einfacher Weise die Vermittlung von Alarminformationen alarml...m an unterschiedlichste Kommunikationsendgeräte KE erreicht werden.

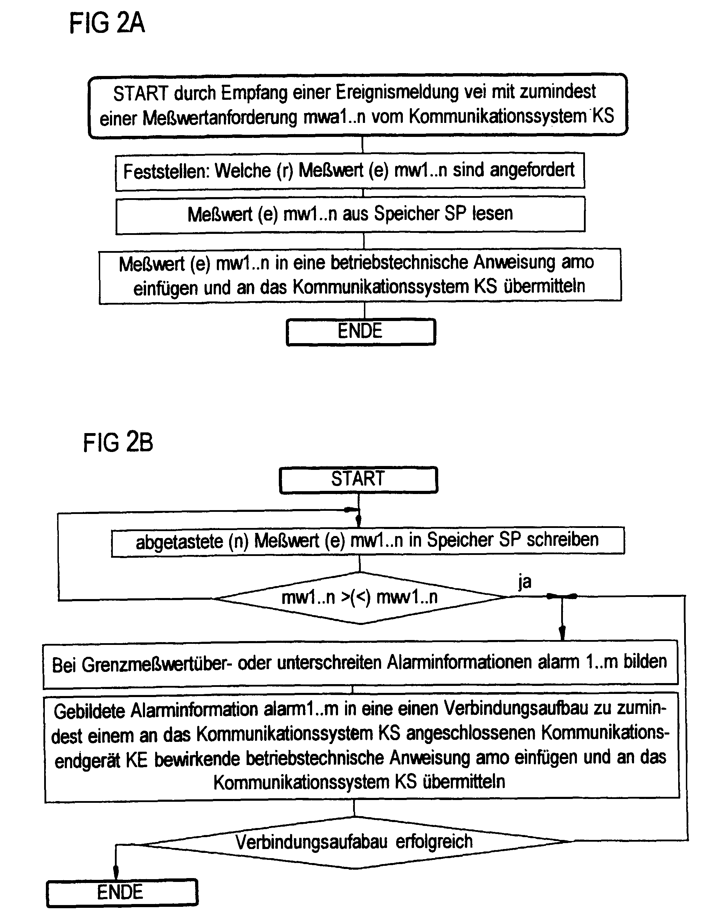

FIG 2A und 2B zeigen anhand sich selbst erläuternder Ablaufdiagramme die Wirkungsweise der Meßwertroutine MWR. Beim Ablaufdiagramm nach FIG 2A wird die Meßwertroutine MWR durch eine vom Kommunikationssystem KS übermittelte Ereignismeldung vei gestartet, die einen KE Anruf eines der Verkehrsbeziehungsgruppe VBZ zugeordneten Kommunikationsendgerätes KE mit einer eine Meßwertanforderung mwa anzeigende Rufnummer meldet. Nach Übermitteln der Meßwerte mw1..n enthaltende, betriebstechnischen Anweisung amo an das Kommunikationssystem KS werden in diesem die übermittelten Meßwerte mw1..n an das die Meßwertanforderung mwa übermittelnde Kommunikationsendgerät KE weitergeleitet und in diesem beispielsweise in der LCD-Anzeige dargestellt. Beim Ablaufdiagramm nach FIG 2B werden in den Erfassungseinheiten ADC1,2 die beispielsweise kontinuierlich vorliegenden Meßwerte mw abgetastet und an die Meßwertroutine MWR übermittelt. Die Abtastrate ist je nach Anwendungsfall einstellbar. Des weiteren ist beim Ablaufdiagramm nach FIG 2B vorausgesetzt, daß ein erfolgreicher Verbindungsaufbau zur Übermittlung von Alarminformationen alarm1...m an die betreffenden Kommunikationsendgeräte KE durch eine vermittlungstechnische Ereignismeldung vei an die Meßwertroutine MWR gemeldet wird. Im Kommunikationssystem KS werden die in der betriebstechnische Anweisung amo enthaltenen Alarminformationen alarm1..n an ein durch die betriebstechnische Anweisung amo bestimmtes Kommunikationsendgerät KE übermittelt.

## Patentansprüche

1. Verfahren zur Anzeige von Meßwerten (mw1..n) an zumindest einem mit einer Vermittlungseinrichtung (KS) verbundenen Kommunikationsnetz-Endgerät (KE), wobei an die Vermittlungseinrichtung (KS) über eine Applikationsschnittstelle (ACL) eine Applikationseinrichtung (PC) angeschlossen ist,
dadurch **gekennzeichnet,**
- daß in der Applikationseinrichtung (PC) zumindest ein an zumindest einer elektrischen Einrichtung (G) gemessener Meßwert (mw1..n) erfaßt und gespeichert wird,
- daß in der Vermittlungseinrichtung (KS) im Rahmen einer Verbindungssteuerung von zumindest einem Kommunikationsnetz-Endgerät (KE) übermittelte Meßwertanforderungen (mwa) mit Hilfe einer von der Applikationseinrichtung (PC) beeinflußbaren Vermittlungsroutine (DGV) zum Aufbau einer Verbindung zu einem beliebigen Kommunikationsnetz-Endgerät aus einer Mehrzahl von mit der Vermittlungseinrichtung (KS) verbindbaren Kommunikationsnetz-Endgeräten und mit Hilfe einer Datenübermittlungsroutine (TDD) über die Applikationsschnittstelle (ACL) an die Applikationseinrichtung (PC) gemeldet werden, und
- die Vermittlungseinrichtung (KS) mit Hilfe der Vermittlungs- und Datenübermittlungsroutine (DVG, TDD) so gesteuert wird, daß der zumindest eine gespeicherte Meßwert (mw1..n) über die Vermittlungseinrichtung (KS) an das die Meßwertanforderung (mwa) übermittelnde Kommunikationsnetz-Endgerät (KE) vermittelt und dort angezeigt wird.

2. Verfahren nach Anspruch 1, dadurch **gekennzeichnet,**
- daß in der Applikationseinrichtung (PC) zumindest ein erfaßter Meßwert (mw1..n) und mit zumindest einer vorgegebenen Meßwertgrenze (mwv1..n) verglichen wird, und
- bei dem bei einem Meßwertgrenzeüber- oder Unterschreiten des zumindest einen erfaßten Meßwertes (mw1..n) mit Hilfe einer in der Vermittlungseinrichtung (KS) durchgeführten und von der Applikationseinrichtung (PC) gesteuerten Verbindungssteuerung das Über- bzw. Unterschreiten an zumindest einem vorgegebenen Kommunikationsnetz-Endgerät (KE) optisch und/oder akustisch angezeigt wird.

3. Verfahren nach Anspruch 1 oder 2, dadurch **gekennzeichnet,** daß die Meßwerte (mw1..n) durch an Generatoren (G) gemessene Einzel- oder Gesamtleistungs- Meßwerte (mw) repräsentiert sind.

4. Verfahren nach einem der vorhergehenden Ansprüche, dadurch **gekennzeichnet,** daß für das zumindest eine Kommunikationsnetz-Endgerät (KE) in der Vermittlungseinrichtung (KS) eine Verkehrsbeziehungsgruppe (VBZ) konfiguriert ist.

5. Verfahren nach einem der vorhergehenden Ansprüche, dadurch **gekennzeichnet,** daß zur Applikationseinrichtung (PC) in analoger oder digitaler Form übermittelte Meßwerte (mw) erfaßt, digitalisiert und gespeichert werden.

6. Verfahren nach einem der vorhergehenden Ansprüche, dadurch **gekennzeichnet,** daß die gemessenen Meßwerte (mw1..n) zyklisch abgetastet werden, wobei die Abtastrate auf die jeweilige Anwendung abgestimmt ist.

7. Verfahren nach einem der vorhergehenden Ansprüche, dadurch **gekennzeichnet,** daß die Meßwerte (mw1..n) und die Alarmierung (alarm1..m) einer Meßwertgrenzeüber- oder unterschreitung an der Bedieneroberfläche (BOF) der Kommunikationsnetz-Endgeräte (KE) angezeigt werden.

8. Verfahren nach einem der vorhergehenden Ansprüche, dadurch **gekennzeichnet,** eine Meßwertanforderung (mwa) durch eine vorgegebene Rufnummer repräsentiert ist, die einen von einem zugeordneten Kommunikationsnetz-Endgerät (KE) übermittelten Verbindungsaufbau im Sinne des Abrufens von Meßwerten (mw1..n) anzeigt.

9. Verfahren nach einem der vorhergehenden Ansprüche, dadurch **gekennzeichnet**, daß in der Vermittlungseinrichtung (KS) die Verbindungsteuerung zu den Kommunikationsnetz-Endgeräten (KE) durch eine von der Applikationseinrichtung (PC) beeinflußte Vermittlungsroutine (DGV) und die Übermittlung der Meßwerte (mwl..n) und der die Meßwertgrenzenüber- oder unterschreitung anzeigenden Informationen (alarm1..m) durch eine Datenübermittlungsroutine (TDD) gesteuert wird, wobei durch die Vermittlungsroutine (DGV) vermittlungstechnische Ereignisse (vei) an die Applikationseinrichtung (PC) gemeldet und vermittlungstechnische Aktionen gemäß von der Applikationseinrichtung (PC) übermittelter betriebstechnischer Anweisungen (amo) eingeleitet werden.

10. Anordnung zur Anzeige von Meßwerten an zumindest einem mit einer Vermittlungseinrichtung (KS) verbundenen Kommunikationsnetz-Endgerät (KE), wobei an der Vermittlungseinrichtung (KS) über eine Applikationsschnittstelle (ACL) eine Applikationseinrichtung (PC) angeschlossen ist,
dadurch **gekennzeichnet,**
daß in der Applikationseinrichtung (PC) Mittel (ADC1, 2, MWR, SP) zur Erfassung und Speicherung zumindest eines an zumindest einer elektrischen Einrichtung (G) gemessenen Meßwertes (mw1..n) vorgesehen sind,
- daß in der Vermittlungseinrichtung (KS) eine Vermittlungsroutine (DVG) zum Aufbau einer Verbindung zu einem beliebigen Kommunikationsnetz-Endgerät aus einer Mehrzahl von mit der Vermittlungseinrichtung (KS) verbindbaren Kommunikationsnetz-Endgeräten und zur Erfassung zumindest einer im Rahmen einer Verbindungssteuerung von zumindest einem Kommunikationsnetz-Endgerät (KE) übermittelten Meßwertanforderung (mwa) und eine Datenübermittlungsroutine (TDD) zum Übermitteln der erfaßten Meßwertanforderung (mwa) über die Applikationsschnittstelle (ATL) an die Applikationseinrichtung (PC) vorgesehen ist, und
- daß in der Vermittlungseinrichtung (KS) die Vermittlungs- und Datenübermittlungsroutine (DGV, TDD) zur Vermittlung des zumindest einen gespeicherten Meßwertes (mw1..n) über die Vermittlungseinrichtung (KS) an das die Meßwertanforderung (mwa) übermittelnde Kommunikationsnetz-Endgerät (KE) vorgesehen ist.

11. Anordnung nach Anspruch 10, dadurch **gekennzeichnet,** daß in der Applikationseinrichtung
- zumindest eine Erfassungseinheit (ADC1,2) zur Erfassung des zumindest einen, über Verbindungsleitungen (VL) herangeführten Meßwerte (mw1..n),
- ein mit der zumindest einen Erfassungseinheit (ADC1,2) verbundenes Mikroprozessorsystem (MPS) zur Speicherung des zumindest einen, erfaßten Meßwertes (mw1..n) und im Sinne einer Übermittlung des zumindest einen Meßwertes (mw1..n) oder einer Meßwertgrenzeüber- oder unterschreitung zu zumindest einem, vorgegebenen Kommunikationsnetz-Endgerät (KE) zur Verbindungssteuerung der Vermittlungseinrichtung (KS), und
- mit dem Mikroprozessorsystem (MPS) verbundenen, eine Applikationschnittstelle (ACL) realisierenden Applikationsschnittstelleneinheit (ACLE) zur Übermittlung von Meßwertanforderungen (mwa), Meßwerten (mw1..n), Meßwertgrenzüber- oder unterschreiten anzeigende Informationen (alarm1..m), vermittlungstechnischen Ereignissen (vei) und betriebstechnischen Anweisungen (amo) vorgesehen ist.

12. Applikationseinrichtung nach Anspruch 10 oder 11, dadurch **gekennzeichnet**, daß die Applikationseinrichtung (PC) durch einen Personalcomputer (PC) realisiert ist, und daß die zumindest eine Erfassungseinheit (ACD1,2) und die Applikationsschnittstelleneinheit (ACLE) über den Mikroprozessorsystembus (MB) mit dem Mikroprozessorsystem (MPS) verbunden ist.

13. Applikationseinrichtung nach Anspruch 10, 11 oder 12, dadurch **gekennzeichnet**, daß zur Steuerung und Überwachung der Erfassung sowie Speicherung der Meßwerte (mw1..n) und der Verbindungssteuerung zu zumindest einem, vorgegebenen Kommunikationsnetz-Endgerät (KE) eine programmtechnisch realisierte Meßwertroutine (MWR) vorgesehen ist.

## Claims

1. Method for displaying measured values (mw1..n) on at least one communications network terminal (KE) connected to a switching device (KS), an application device (PC) being connected to the switching device (KS) via an application interface (ACL),
characterized
- in that at least one measured value (mw1..n) measured at at least one electrical device (G) is acquired and stored in the application device (PC),
- in that, in the switching device (KS), measured value requirements (mwa) communicated in the context of connection control by at least one communications network terminal (KE) are signalled, with the aid of a switching routine (DGV), which can be influenced by the application device (PC), for setting up a connection to an arbitrary communications network terminal from a plurality of communications network terminals that can be connected to the switching device (KS), and with the aid of a data communication routine (TDD), via the application interface (ACL) to the application device (PC), and
- the switching device (KS) is controlled, with the aid of the switching and data communication routines (DVG, TDD), in such a way that the at least one stored measured value (mw1..n) is switched via the switching device (KS) to the communications network terminal (KE) communicating the measured value requirement (mwa) and is displayed there.

2. Method according to Claim 1, characterized
- in that, in the application device (PC), at least one acquired measured value (mw1..n) is compared with at least one predetermined measured value limit (mwv1..n), and
- in which, in the case where the at least one acquired measured value (mw1..n) exceeds or falls below the measured value limit, with the aid of connection control which is carried out in the switching device (KS) and is controlled by the application device (PC), the fact that the said value has exceeded or fallen below the said limit is indicated visually and/or acoustically at at least one predetermined communications network terminal (KE).

3. Method according to Claim 1 or 2, **characterized** in that the measured values (mw1..n) are represented by individual or total power measured values (mw) measured at generators (G).

4. Method according to one of the preceding claims, **characterized** in that a traffic relation group (VBZ) is configured for the at least one communications network terminal (KE) in the switching device (KS).

5. Method according to one of the preceding claims, **characterized** in that measured values (mw) that have been communicated to the application device (PC) in analogue or digital form are acquired, digitized and stored.

6. Method according to one of the preceding claims, **characterized** in that the measured values (mw1..n) are sampled cyclically, the sampling rate being coordinated with the respective application.

7. Method according to one of the preceding claims, **characterized** in that the measured values (mw1..n) and the alerting (alarm1..m) of a measured value having exceeded or fallen below the measured value limit are indicated at the operator interface (BOF) of the communications network terminals (KE).

8. Method according to one of the preceding claims, **characterized** in that a measured value requirement (mwa) is represented by a predetermined call number which indicates a connection set-up, communicated by an assigned communications network terminal (KE), for the purpose of fetching measured values (mw1..n).

9. Method according to one of the preceding claims, **characterized** in that, in the switching device (KS), the connection control with respect to the communications network terminals (KE) is controlled by a switching routine (DGV) influenced by the application device (PC) and the communication of the measured values (mw1..n) and of the information items (alarm1..m) indicating that a measured value has exceeded or fallen below the measured value limit is controlled by a data communication routine (TDD), the switching routine (DGV) signalling switching events (vei) to the application device (PC) and initiating switching actions in accordance with operational instructions (amo) communicated by the application device (PC).

10. Arrangement for displaying measured values on at least one communications network terminal (KE) connected to a switching device (KS), an application device (PC) being connected to the switching device (KS) via an application interface (ACL),
characterized
in that means (ADC1, 2, MWR, SP) for acquiring and storing at least one measured value (mw1..n) measured at at least one electrical device (G) are provided in the application device (PC),
- in that, in the switching device (KS), a switching routine (DVG) is provided for setting up a connection to an arbitrary communications network terminal from a plurality of communications network terminals that can be connected to the switching device (KS), and for acquiring at least one measured value requirement (mwa) communicated in the context of connection control by at least one communications network terminal (KE), and a data communication routine (TDD) is provided for communicating the acquired measured value requirement (mwa) via the application interface (ATL) to the application device (PC), and
- in that, in the switching device (KS), the switching and data communication routines (DGV, TDD) are provided for switching the at least one stored measured value (mw1..n) via the switching device (KS) to the communications network terminal (KE) communicating the measured value requirement (mwa).

11. Arrangement according to Claim 10, characterized in that, in the application device, provision is made
- of at least one acquisition unit (ADC1,2) for acquiring the at least one measured value (mw1..n) introduced via connecting lines (VL),
- of a microprocessor system (MPS), connected to the at least one acquisition unit (ADC1,2), for storing the at least one, acquired measured value (mw1..n) and for the purpose of communication of the at least one measured value (mw1..n) or of the fact that a measured value has exceeded or fallen below the measured value limit to at least one, predetermined communications network terminal (KE) for the connection control of the switching device (KS), and
- of an application interface unit (ACLE), which is connected to the microprocessor system (MPS), realizes an application interface (ACL) and serves for communicating measured value requirements (mwa), measured values (mw1..n), information items (alarm1..m) indicating that a measured value has exceeded or fallen below the measured value limit, switching events (vei) and operational instructions (amo).

12. Application device according to Claim 10 or 11, characterized in that the application device (PC) is realized by a personal computer (PC), and in that the at least one acquisition unit (ACD1,2) and the application interface unit (ACLE) are connected to the microprocessor system (MPS) via the microprocessor system bus (MB).

13. Application device according to Claim 10, 11 or 12, characterized in that a measured value routine (MWR) realized as software is provided for the control and monitoring of the acquisition and storage of the measured values (mw1..n) and the connection control with respect to at least one, predetermined communications network terminal (KE).

## Revendications

1. Procédé d'affichage de valeurs de mesure (mw1..n) sur au moins un terminal de télécommunications (KE) relié à un dispositif de communication (KS), ledit dispositif de communication (KS) étant connecté via une interface d'application (ACL) à un dispositif d'application (PC), caractérisé
- en ce que dans le dispositif d'application (PC), au moins une valeur de mesure (mw1..n) mesurée sur au moins un dispositif électrique (G) est saisie et stockée en mémoire,
- en ce que dans le dispositif de communication (KS), dans le cadre d'une commande de liaison, des appels de valeurs de mesure (mwa) transmis par au moins un terminal de télécommunications (KE) sont signalés à l'aide d'une routine de communication (DGV) influençable par le dispositif d'application (PC), destinée à établir une liaison avec un terminal de télécommunications quelconque parmi une pluralité de terminaux de télécommunications pouvant être reliés au dispositif de communication (KS), et à l'aide d'une routine de transmission de données (TDD), par l'intermédiaire de l'interface d'application (ACL) au dispositif d'application (PC), et
- en ce que le dispositif de communication (KS) est commandé à l'aide desdites routines de communication et de transmission de données (DVG, TDD), de telle sorte que la au moins une valeur de mesure (mw1..n) stockée en mémoire est communiquée par l'intermédiaire du dispositif de communication (KS) au terminal de télécommunications (KE) transmettant l'appel de valeurs de mesure (mwa), et y est affichée.

2. Procédé selon la revendication 1, caractérisé
- en ce que dans le dispositif d'application (PC), au moins une valeur de mesure (mw1..n) saisie est comparée avec au moins une limite de valeurs de mesure (mwv1..n) définie d'avance, et
- dans lequel, en cas de dépassement de la limite supérieure ou inférieure de valeurs de mesure par la au moins une valeur de mesure saisie (mv1..n), ledit dépassement de la limite supérieure ou inférieure est affiché optiquement et/ou acoustiquement, à l'aide d'une commande de liaison effectuée dans le dispositif de communication (KS) et commandée par le dispositif d'application (PC), sur au moins un terminal de télécommunications (KE) défini d'avance.

3. Procédé selon la revendication 1 ou 2, caractérisé en ce que les valeurs de mesure (mw1..n) sont représentées par des valeurs de mesure de puissance individuelle ou totale (mw) mesurées sur des générateurs (G).

4. Procédé selon l'une quelconque des revendications précédentes, caractérisé en ce que pour le au moins un terminal de télécommunications (KE), un groupe de corrélations de communication (VBZ) est configuré dans le dispositif de communication (KS).

5. Procédé selon l'une quelconque des revendications précédentes, caractérisé en ce que des valeurs de mesure (mw) transmises au dispositif d'application (PC) sous forme analogique ou numérique sont saisies, numérisées et stockées en mémoire.

6. Procédé selon l'une quelconque des revendications précédentes, caractérisé en ce que les valeurs de mesure mesurées (mw1..n) sont explorées cycliquement, la fréquence d'exploration étant adaptée à l'application respective.

7. Procédé selon l'une quelconque des revendications précédentes, caractérisé en ce que les valeurs de mesure (mw1..n) et l'alarme (alarm1..m) d'un dépassement de la limite supérieure ou inférieure de valeurs de mesure sont affichés sur l'interface utilisateur (BOF) des terminaux de télécommunications (KE).

8. Procédé selon l'une quelconque des revendications précédentes, caractérisé en ce qu'un appel de valeurs de mesure (mwa) est représenté par un numéro d'appel défini d'avance, lequel affiche un établissement de liaison transmis par un terminal de télécommunications (KE) attribué, au sens de l'appel de valeurs de mesure (mw1..n).

9. Procédé selon l'une quelconque des revendications précédentes, caractérisé en ce que dans le dispositif de communication (KS), la commande de liaison avec les terminaux de télécommunications (KE) est commandée par une routine de communication (DGV) influencée par le dispositif d'application (PC), et la transmission des valeurs de mesure (mw1..n) et des informations (alarm1..m) indiquant un dépassement de la limite supérieure ou inférieure de valeurs de mesure par une routine de transmission de données (TDD), la routine de communication (DGV) signalant au dispositif d'application (PC) des événements de communication (vei) et déclenchant des actions de communication (amo) selon des instructions d'exploitation (amo) transmises par le dispositif d'application (PC).

10. Dispositif d'affichage de valeurs de mesure sur au moins un terminal de télécommunications (KE) relié à un dispositif de communication (KS), ledit dispositif de communication (KS) étant connecté, via une interface d'application (ACL), à un dispositif d'application (PC), caractérisé
- en ce que le dispositif d'application (PC) comporte des moyens (ADC1, 2, MWR, SP) pour saisir et stocker en mémoire au moins une valeur de mesure (mw1..n) mesurée sur au moins un dispositif électrique (G),
- en ce que le dispositif de communication (KS) comporte une routine de communication (DVG) pour établir une liaison avec un terminal de télécommunications quelconque parmi une pluralité de terminaux de télécommunications pouvant être reliés au dispositif de communication (KS), et pour saisir au moins un appel de valeurs de mesure (mwa) transmis dans le cadre d'une commande de liaison par au moins un terminal de télécommunications (KE), et une routine de transmission de données (TDD) pour transmettre l'appel de valeurs de mesure (mwa) saisi, via l'interface d'application (ATL), au dispositif d'application (PC), et
- en ce que le dispositif de communication (KS) comporte les routines de communication et de transmission de données (DGV, TDD) pour communiquer la au moins une valeur de mesure (mw1..n) stockée en mémoire, via le dispositif de communication (KS), au terminal de télécommunications (KE) transmettant l'appel de valeurs de mesure (mwa).

11. Dispositif selon la revendication 10, caractérisé en ce que le dispositif d'application comporte
- au moins une unité de saisie (ADC1, 2) pour saisir la au moins une valeur de mesure (mw1..n) amenée par des circuits de liaison (VL),
- un système microprocesseur (MPS) relié à la au moins une unité de saisie (ADC1, 2), pour stocker en mémoire la au moins une valeur de mesure (mw1..n) saisie et, au sens d'une transmission de la au moins une valeur de mesure (mw1..n) ou d'un dépassement de la limite supérieure ou inférieure de valeurs de mesure à au moins un terminal de télécommunications (KE) défini d'avance, pour commander la liaison du dispositif de communication (KS), et
- une unité d'interface d'application (ACLE) reliée au système microprocesseur (MPS) et réalisant une interface d'application (ACL), pour transmettre des appels de valeurs de mesure (mwa), des valeurs de mesure (mw1..n), des informations (alarm1..m) indiquant un dépassement de la limite supérieure ou inférieure de valeurs de mesure, des événements de communication (vei) et des instructions d'exploitation (amo).

12. Dispositif d'application selon la revendication 10 ou 11, caractérisé en ce que le dispositif d'application (PC) est réalisé par un ordinateur personnel (PC) et en ce que la au moins une unité de saisie (ACD1, 2) et l'unité d'interface d'application (ACLE) sont reliées au système microprocesseur (MPS) via le bus du système microprocesseur (MB).

13. Dispositif d'application selon la revendication 10, 11 ou 12, caractérisé en ce que pour commander et contrôler la saisie ainsi que le stockage en mémoire des valeurs de mesure (mw1..n) et pour commander la liaison avec au moins un terminal de télécommunications (KE) défini d'avance, une routine de valeurs de mesure (MWR) réalisée par programme est prévue.
